# EUROPEAN PATENT SPECIFICATION

(11) **EP 0 849 947 B1**
(45) Date of publication and mention of the grant of the patent: **14.02.2007**
(21) Application number: 96120485.6
(22) Date of filing: 19.12.1996
(51) Int. Cl.: H04N 7/088

(54) **Television signals receiver implementing an electronic guide method of the available television programs**
Empfänger für Fernsehsignale mit einer elektronischen Programmauswahl von verfügbaren Fernsehprogrammen
Récepteur de signaux de télévision à guide électronique de programmes de télévision disponibles

(43) Date of publication of application: 24.06.1998
(73) Proprietor: S.I.SV.EL. S.p.A., 10060 None (TO) (IT)
(72) Inventor: Lanyon, James Reginald Georg, Sark, Channel Island (GB)
(74) Representative: Gaggini, Carlo

(56) References cited:
- EP-A- 0 503 070
- EP-A- 0 536 828
- US-A- 5 552 833
- US-A- 5 585 857

## Description

The present invention refers to a method of processing digital signals inserted during vertical flyback periods in a television signal by a television signals receiver, comprising:
- at least a tuner device for tuning upon choice one from the various television stations receivable,
- a decoder for receiving and decoding the digital signals inserted, during vertical flyback periods, in the received television signal,
- a central unit of control and digital processing, connected to the decoder also for analysing the received and decoded digital signals,
- command means for allowing the user to send operative commands to said central unit,
- a first non volatile digital memory for storing data, within which it is possible to store the tuning coordinates of a plurality of broadcasting stations, tying every station with a "tuning program number" and
- a second non volatile digital memory for storing operative instructions for the said central unit,
said receiver also comprising or being associated to:
- an image display device,
- a device for recording television programs.

Television signals receivers implementing the method described are known; for instance from European patent application N° 0 438 185.

The technical problem being the basis of the present invention is the following.

An ever increasing number of television broadcasting stations is taking place: be it those of the traditional type, via satellite, via cable and so on; the user has difficulty in being informed of all the programs being offered.

The traditional means of information, newspapers and magazines, are often not kept up to date (for instance due to subsequent variations in the programming) e therefore become difficult to consult.

Such difficulties have brought the distributing companies of cable or satellite transmissions to study the possibility of the so-called electronic program guides (note for instance the American patent application US 5 473 609 or the Japanese patent application JP 07 298 245 which provide for the transmission, next to the actual programs, of informative signals on the programs themselves).

On the other hand the broadcasting stations that also transmit teletext signals usually provide, in appropriate pages, the transmission of lists of the available programs for the current and/or successive days.

With this in mind see the Japanese patent application JP 07 193 756 which provides for the possibility of choosing the program by way of a mobile cursor on such teletext pages.

It has also been proposed, by way of program broadcasting associations (EBU) and by receiver producers (EACEM), to standardise the information relative to television programs (E.P.G. system), so as to make it possible for receivers to supply users with better, more exact and easier information on actual programs. Such a system provides for sending said information during some lines of the vertical flyback, which are different from those that normally carry teletext or Datacast information. However even though the structure of such data is organised in the same way as the teletext data, in the following, for simplicity, the diction 'teletext' shall be used in order to indicate the coded digital data which carries the EPG information.

The aim of the present invention is that of indicating how it is possible to manufacture a television signals receiver able to help the user in a simple and practical way, not only by indicating the programs which can be chosen, but facilitating the user to the maximum with this task.

In order to reach such aims the subject of the present invention is a method of processing digital signals inserted during vertical flyback periods in a television signal by a television signals receiver having the characteristics being principally described in the first claim.

Further improvements of the invention are described in the sub-claims.

It is to be noted that all the characteristics described in the enclosed claims and sub-claims are an integral part of the present description.

Further characteristics and advantages of the present invention shall result in being clear from the following description and annexed drawings, supplied purely as an explanatory and non limiting example, wherein:
- figure 1 represents a simplified block diagram of a television signals receiver according to the invention;
- figure 2 represents the block diagram of a significant part of the logic flow according to the invention of the central unit of the receiver of fig. 1;
- figure 3 represents the block diagram of a second significant part of the logic flow according to the invention of the central unit of the receiver of fig. 1;
- figure 4 represents the key board of a remote control unit for the signals receiver according to the invention;
- figure 5 represents an example of a list of programs that can be displayed by the receiver of signals according to the invention.

The standardised information relating to television programs can be contained in a plurality of teletext type pages; one of these pages contains the index (directory) of the other pages that contain the information relative to the television programs.

This index page is identified by a special and defined page number (code); for instance this number contains at least a number being greater than 9. Examples of numbers of this type are 1A0 or C00.

The decoder of the receiver according to the invention (that can obviously be either a television set, a video recorder, or a simple tuner-amplifier, such as those used for satellite receivers) is programmed to search for such index page; from which it obtains the numbers of the pages containing information on programs; this information is expressed in a standardised manner, so as that the decoder can without difficulty obtain all the data that it needs.

The decoder reads the pages of interest, stores the data and with such data is able to create a menu to be produced on a display screen.

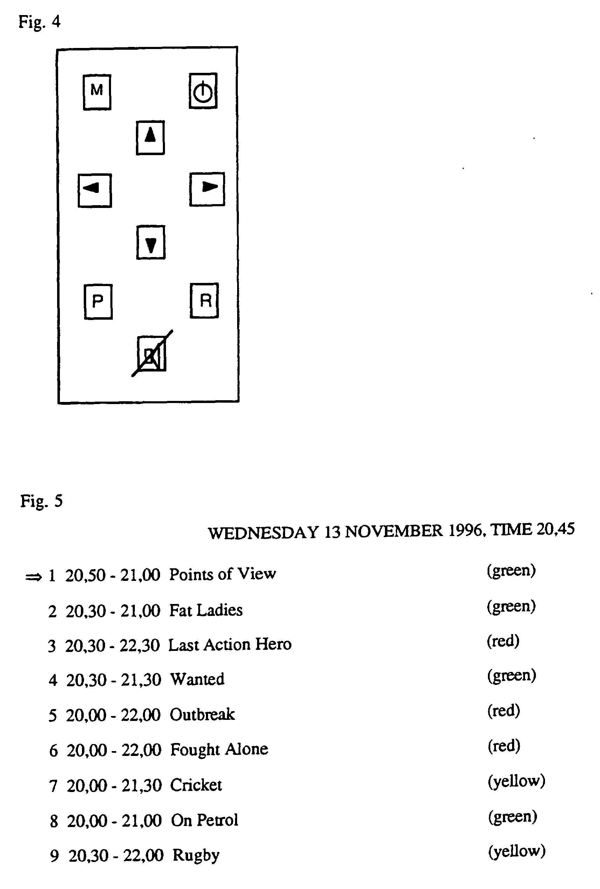

Such menu can be stored every time that a determined key is pressed (key M, figure 4); inasmuch the key in question in a preferred solution is also able to recall the receiver from the stand-by condition, so that the display of the menu is automatically effected when the receiver is recalled from stand-by.

It is in fact better to always leave the receiver in stand-by, but not completely switched off; in this way it can automatically explore all the receivable broadcasting stations and store the data on the programs, in a way so as to be ready, as soon as recalled to the normal functioning, to display the menu of programs.

Naturally such operation of exploring, analysis and memorising is carried out by the receiver immediately after the switching on and then periodically repeated at predetermined intervals, for instance every hour, so as to update the memory.

Being as that the acquisition times of the pages containing the information on the programs is rather long, it is advantageous that the central unit of control and processing (15) be programmed in such a way to provide for updating the memory only with data relating to television programs of the broadcasting stations, the coordinates of which have been stored in said first memory (17), repeating the operations as mentioned in claim 1 at relatively brief determined intervals of times, for instance every hour, either when the receiver is in the stand-by condition, or when it is in its normal functioning condition.

It is also advantageous that the said central unit (15) be on the other hand programmed to update the memory with data relating to television programs relating to all the receivable broadcasting stations, at relatively long determined intervals of time, for instance once a day. In the case a station not yet present in the memory of "programs" is tuned into, the central unit provides for storing it and assigning it a tuning program number" to which the data of programs obtained from the teletext pages transmitted by the said transmitting station can be associated.

In order to facilitate this updating function, the receiver can advantageously be equipped with more than one tuner, so as to be able to update the memory even during the display of a program or its recording; the other tuner (or tuners) also allows for the display of a program and, simultaneously, the recording of another.

The base menu can advantageously contain the programs being transmitted at the moment of recall from "stand-by", i.e. those of which the beginning is previous, and the end is successive, to the time of display of the menu.

The menu can advantageously be constituted by at least 9 lines, each containing a program; in the heading of the menu, on the first line, the date and current hour will be indicated.

Every line can contain from left to right:
- the "tuning program number", i.e. the number associated by the user to the program and stored in the broadcasting stations memory of the receiver;
- the beginning time;
- the end time;
- the title of the program.

An example of a program list, representing the programs on show during a normal evening in England, is represented in figure 5.

The "tuning numbers" illustrated in figure 5 correspond to the following broadcasting stations:
1=BBC 1; 2=BBC 2; 3=ITV; 4=CHANNEL 4; 5=MOVIE CHANNEL; 6=SKY MOVIES; 7=SKY SPORTS; 8=SKY ONE; 9=EURO SPORT.

There is nothing to prohibit that for each line of programs, associated to "tuning numbers", also the broadcasting stations be indicated: key 1=BBC 1, key 2=BBC 2, and so on.

To the left of the "tuning program number" a cursor can advantageously be displayed (for instance a flashing square or an arrow) for indicating the selected program; as an alternative rather than the cursor the "tuning program number" itself can flash or the whole line; or the selected line can be displayed in a different colour than the others, for instance red.

The line can also be displayed in a different colour according to the type of program; for instance, see figure 5, the following colours can be used:
- film, red;
- sport, yellow;
- news, white
- others (documentaries, variety, etc.), green.

As an alternative, the type of program can be indicated, after the title of the program, by clear or abbreviated writing (film, sport, news, various; or F, S, N, V).

In this very simple way the user has the availability, upon the moment of switching on the apparatus, of the situation of the programs in that moment; the user can select the program that he prefers from the menu, moving the cursor on the line (i.e. on the program) desired by way of two keys distinguished with an upward pointing arrow and a downward pointing arrow (⇑, ⇓ see figure 4).

By pressing the P key the relative program is tuned and displayed; it is also possible to provide for that once, on the menu of current programs, a determined program has been selected and that such selection is not changed for a determined time (for instance 3 seconds), the receiver automatically provides for tuning and displaying the program without the necessity of pressing P key.

At this point the user with the two keys, upward arrow-downward arrow, can change program in the normal way, as usual with a television set.

If the M key is pressed, the previously described base menu re-appears; with the key distinguished with the right pointing arrow (⇒) the menu of the successive programs respect those of the base menu is shown (i.e. programs that have not yet started); the left pointing arrow (⇐) returns to the previous menu.

During the normal television reception on the other hand such keys (⇒,⇐) can be used in the normal way for making adjustments to the volume.

If the P key is pressed when a particular program of a future menu is displayed, the receiver is programmed to switch on to the selected program at the time in which the program begins, with a suitable anticipation, for instance 5 minutes before it starts. If, during the same conditions of a menu relating to future transmissions, the R key is pressed the receiver is programmed to record the selected program; the receiver could eventually switch itself on even 5 minutes before the starting time of the program and provide to record the selected program, switching itself off for instance 10 minutes after the time of the programs end.

If the V.P.S. code is present in the selected program, the microprocessor of the central control unit 15 uses the relevant information in order to record only the desired program, without the need of starting the recording in advance and to finish it in delay.

The remaining two keys of figure 5 are usually "stand-by" and audio "muting" keys.

When the menu is displayed, in a preferred version of the invention, the audio is mute.

In the menu, if the receiver does not have, in its memory, data concerning a program relative to a determined broadcasting station, the corresponding line of the menu will be empty or will carry an indication of the type "Data not available".

As can be seen from a remote control having only 9 keys, the television receiver according to the invention allows, with the maximum ease, the user to choose in a moment the preferred program from those available or to program in advance its vision or recording; the ease of use of the receiver according to the invention is such that even instructions for its use do not seem necessary.

In case a very long program is forecasted, which may be interrupted for transmitting a different program, this fact can also be signalled in the menu. For instance a film may be divided in two halves and a news bulletin may be transmitted in between; or a so called "container program" may contain different items. Any item could be identified separately in the menu. In this case it is also possible that the user can decide whether he or she wants that the selected "container" program remains selected until the final end or until the interruption. For example double pressing of the M key (or the P key or the R key) could mean that the final end of the selected program has to be waited for.

It is also clear that the receiver according to the invention can also supply more sophisticated applications; in fact the data stored relative to the transmission of programs can be processed by the control unit of the receiver in such a way so as to create a real and proper database with which it would then be possible to search and view, or to program, for instance, all the transmissions relating to sport, or all the films and so on.

In this more elaborate version of the invention, the keyboard of the remote control would also be appropriately equipped with numeric keys 1-9.

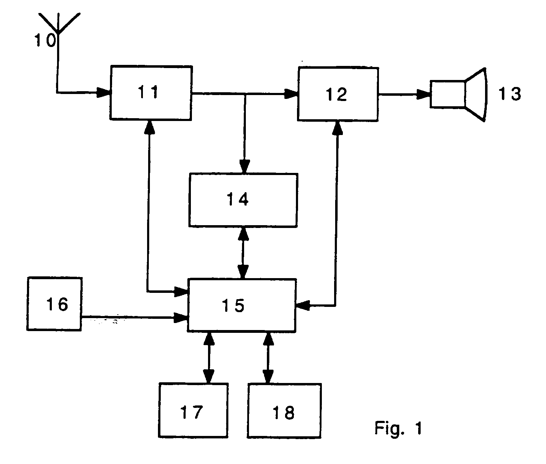

In figure 1, in which the simplified block diagram of the television signals receiver is represented, reference number 10 indicates the receiving antenna, 11 indicates a conventional tuner and amplifier of television signals, which we can suppose by way of example is of the frequency synthesis type comprising an intermediate frequency amplifier and the video detector.

Reference number 12 indicates, in the same figure, the circuit block, also conventional, comprising the amplifier of the video signals; the reference number 13 indicates the image display device, which we may suppose as being of the conventional type (cathode-ray tube being internal or external of the appliance).

Reference number 14 indicates a teletext decoder, which provides for extracting the teletext signals from the video signal, said teletext signals being inserted in normal way in the interval of the vertical flyback periods; the decoder 14 also provides for, in the know way, decoding said teletext signals and for processing them so as to reconstruct the transmitted pages of text. The teletext decoder can be of a conventional type, modified, if necessary, in order to be able of handling pages having greater numbers than usual.

Reference number 15 indicates a central unit of control and digital processing (microprocessor), of the known type, which provides for the functional management of the television signals receiver.

Reference number 16 indicates a command generating means, that can be comprised for example of a known infrared rays remote control with a keyboard, and relative interface towards the central unit 15; reference number 17 indicates a read and write memory (RAM) of the non volatile type, for memorising the digital data; whereas reference number 18 indicates a read only non volatile memory (ROM) which contains the operative instructions for the central unit 15.

Moreover the central unit 15 provides more precisely to:
- receive and decode the commands input by the user on the command means 16;
- superintend the search and tuning of the signals, controlling the programmable frequency divider contained in the tuner 11;
- control the decoder 14, from which it receives the teletext signals possibly inserted in the received television signal;
- analyse the teletext signals received from the decoder 14, in particular extracting, as described, the pages relative to the television programs (which may be identified for instance by the hexadecimal code) and stored in the RAM memory 17;
- process the information contained in said stored pages and to store them once again in the memory 17 in a "data base" format, that is to say in the form of "normalised" records, each being relative to a determined television program and containing a series of fields, in which "key" data is found, in the form of text, for instance the title of the program, the type of program (news, film, sport, culture, cookery, and so on), date and starting time, duration, broadcasting station;
- search in the stored "data base" one or more desired records, based on a determined command sent by the user (for instance: search for all the programs for this afternoon that deal with sport) and display them reading the data in the memory and sending them to the video amplifier 12 so as to be displayed on the display 13.

In order to store all the teletext pages transmitted by the various broadcasting stations being relative to the programming of television programs the receiver has to periodically carry out, upon command or automatically, the following operations:
- explore all the receivable frequencies tuning into the broadcasting stations one after the other or only those associated to the memory of "tuning programs" (depending on whether it is a daily exploration or an hourly updating),
- for each broadcasting station tuned, to control whether it transmits teletext signals, and, in the affirmative case, acquire and store, after having identified them, all the pages relative to the programming of the transmissions;
- once all the pages relating to television programs have been stored, it organises the information in the form of a "data base" and then stores them under this format.

For the sake of simplicity the power supply circuits, the CRT deflection circuit and the circuits relative to the audio parts of the television are not indicated in figure 1 and are not mentioned, inasmuch they are not essential for the understanding of the invention.

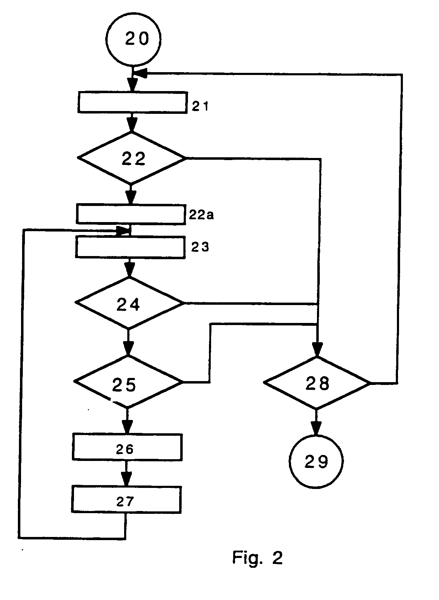

In figure 2 the block diagram of a first significant part of the logic flow according to the invention of the central unit of the receiver of figure 1 is represented.

Such flow corresponds to a selected part of the operative instructions contained in the memory 18.

The block indicated with number 20 indicates the starting block of the logic flow relative to the functions of search and storing on the teletext pages information relative to the programming of television transmissions.

Control can reach block 20 in two ways; for example it can be provided that every time the receiver is switched on the control automatically passes to block 20; or the control can reach block 20 after the user has sent a determined command signal, or when the receiver is found to be in the stand-by condition at a time of an established day or every time that the receiver is placed in the stand-by condition.

It is clear that the described operations, if carried out in the stand-by condition, do not create disturbances or slow down the other functions that the receiver has to carry out.

The control is then passed from block 20 to the successive block 21.

Block 21 provides for tuning the next receivable station in the range of available frequencies; control passes to the successive block 22.

Block 22 is a test block; it controls whether the broadcasting station transmits a teletext service; in the affirmative case control passes to block 22a; in the negative case control passes to block 28; in all the test blocks the lower output corresponds to the YES output; the lateral output corresponds to the NO output.

Block 22a provides for identifying the special index page of the television programs; it obtains the numbers of the pages containing the information on the programs and stores them; control then passes to the successive block 23.

Block 23 provides for the acquisition of the current teletext page; control passes to the successive block 24.

Block 24 is a test block; it controls whether the acquired teletext page has not already been received; in the affirmative case (page not received) control passes to block 25; in the negative case (page already received) control passes to block 28.

Block 25 is a test block; it controls whether the acquired teletext page relates to the programming of the transmissions; in the affirmative case control passes to block 26; in the negative case control passes to block 28.

Block 26 provides for extracting the information from the acquired page and to store it in the memory 17; control passes to the successive block 27.

Block 27 provides for increasing the number of the current page; control passes back to block 23.

Block 28 is a test block; it controls whether the tuned broadcasting station is the last of the frequencies to be explored; in the affirmative case control passes to block 29; in the negative case control passes back to block 21.

Block 29 is the end of function block; control can return to a block of the main program of the control unit 15, for instance the one in which the unit 15 carries out the reading of the keyboard of the command means 16.

From the description of figure 2 it results in being clear how the search and store function on the teletext pages of the information relative to the programming of television programs is carried out.

The information can advantageously be stored in the memory 17 under the form of a "database", i.e. under the form of a series of "records", each being relative to a determined television program. Every "record" could for instance be constituted of a fixed number of characters, for example 48; every "record" will be divided in a certain number of "fields", for example 5.

In the first field, to which for example 18 characters could be assigned, the title of the program will be contained; in the second field, to which for example 6 characters could be assigned, the type of program (film, sport, news, documentary, etc.) will be contained; in the third field, to which for example 15 characters could be assigned, the date and program starting time will be contained; in the fourth field, to which for example 5 characters could be assigned, the name of the broadcasting station of the program will be contained; finally in the fifth field, to which for example 4 characters could be assigned, the duration, expressed in minutes, will be contained.

For instance several records may result as the following:
How do they do that; documentary; 13/11/96 20,00; BBC 1; 50
Fat Ladies: Food in the wild; Variety; 13/11/96 20,30; BBC 2; 30
Last action hero; Film; 13/11/96 20,30; TV; 120
Wanted; variety; 13/11/96 20.30; Channel 4; 60

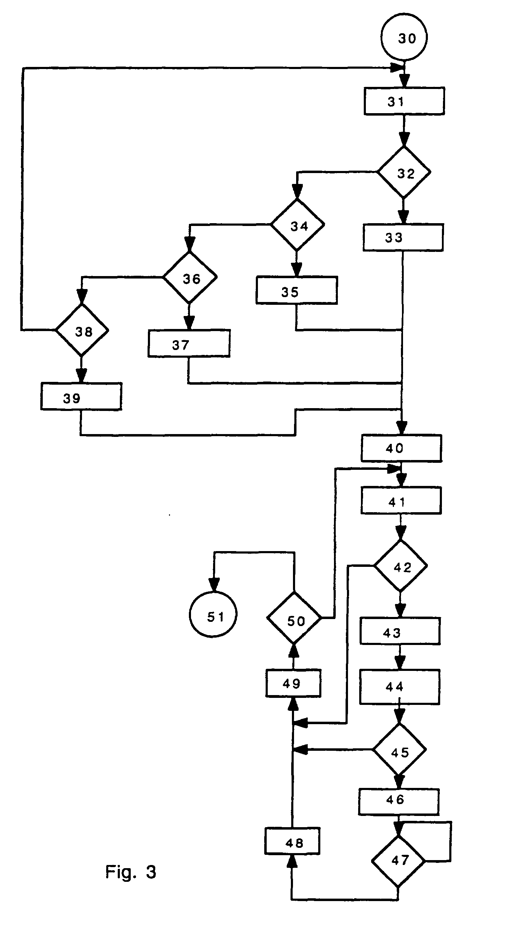

In figure 3 the block diagram of a second significant part of the logic flow according to the invention of the central unit of the receiver of figure 1 is represented.

Such flow corresponds to a selected part of the operative instructions contained in the memory 18.

The block indicated with the number 30 indicates the starting block of the logic flow relative to the search and display function of the "records" that the user wishes to consult from among those stored.

Control reaches block 30 after the user has sent a determined command signal for starting the search.

Control is passed from block 30 to the successive block 31.

Block 31 provides for asking the user the field of records to search; a message of the type: "Indicate the desired field number" is displayed on the screen and the user then types the relative number; for instance if the desired field is that of the title the user will type the number 1; such number is stored and control passes to the successive block 32.

Block 32 is a test block; it controls whether the field number indicated is number 1; in the affirmative case control passes to block 33; in the negative case control passes to block 34.

Block 33 provides for asking the user the title of the records to be searched; a message of the type: "Indicate the title of the desired program" is displayed on the screen and the user will introduce such title by way of the keyboard according to one of the various systems known for sending alphanumeric data by way of a remote control unit to the central unit 15, such indication is stored and control passes to the successive block 40.

Block 34 is a test block; it controls whether the number of the field indicated is number 2; in the affirmative case control passes to block 35; in the negative case control passes to block 36.

Block 35 provides for asking the user the type of program to be searched; a message of the type: "Indicated the type of program desired" is displayed on the screen and the user will introduce the type of program desired; such indication is stored and control passes to the successive block 40.

Block 36 is a test block; it controls whether the field number indicated is 3; in the affirmative case control passes to block 37; in the negative case control passes to block 38.

Block 37 provides for asking the user the date and starting time of the program to be searched; a message of the type: "Indicate date and starting time of desired program" is displayed on the screen and the user will introduce the date and starting time of the desired program; such indication is stored and control passes to the successive block 40.

Block 38 is a test block; it controls whether the field number indicated is 4; in the affirmative case control passes to block 39; in the negative case control passes back to block 31.

Block 39 provides for asking the user the broadcasting station of the desired program to be searched; a message of the type: "Indicate the broadcasting station of the desired program" is displayed on the screen and the user will introduce the broadcasting station of the desired program; such indication is stored and control passes to the successive block 40.

Block 40 provides to make equal to 1 the number N of the record to be examined (current record) and to set to zero the number N1 of the displayed records; control then passes to block 41.

Block 41 provides for examining the field indicated of the record having the current number N; control passes to the successive block 42.

Block 42 is a test block; it controls whether the contents of the field indicated correspond to the text indicated by the user; in the affirmative case control passes to block 43; in the negative case control passes back to block 49.

Block 43 provides for extracting the record examined and to display it on the screen; control passes to the successive block 44.

Block 44 provides for increasing by one unit the number N1 of the records displayed and passes the control to the successive block 45.

Block 45 is a test block; it controls whether the number N1 of the records displayed is greater than 15, i.e. the screen is full; in the affirmative case control passes to block 46; in the negative case control passes to block 49.

Block 46 provides for displaying a message of the type: "Press a key to continue" and passes the control to the successive block 47.

Block 47 is a test block; it controls whether the user has pressed any key on the keyboard; in the affirmative case control passes to block 48; in the negative case control passes back to block 47.

Block 48 provides for canceling the screen and setting to zero the number N1 of the records displayed; control passes to block 49.

Block 49 provides for increasing by one unit the number N of the current record; control passes to block 50.

Block 50 is a test block; it controls whether the number N of the current record is greater than the total number of records stored in the memory; in the affirmative case control passes to block 51; in the negative case control passes back to block 41.

Block 51 is the end of function block; control can go back to a block of the main program of the central unit 15, for instance the one in which the unit 15 carries out the reading of the keyboard of the command means 16, in particular to control whether a signal is sent which indicates to select a program from among those found in this way.

From the description of figure 3 it results in being clear how the search and display function of the record is carried out based on the commands sent by the user to the control unit 15 by way of command means 16. In particular how it is possible starting from data relative to the title of the program or to the type of program or the date and starting time or the desired broadcasting station to find one or more programs that are desired to be received.

From the given description the characteristics of the method of processing digital signals inserted during vertical flyback periods in a television signal by a television signals receiver subject of the present invention result in being clear, as do its advantages.

In particular how it is possible to take advantage of such digital information, transmitted under the form of teletext pages, and being relating to television programs that can be received in a determined area, with the aim of having a program menu available starting from those on the air at the moment of consulting the menu itself and from this to select the program of interest to the user; or how it is possible to have available a data base of the programs of the various broadcasting stations organised in fields, that can be explored by way of key words and in this way obtain the extraction from the data base of one or more programs of interest to the user. It is clear that numerous variants, apart from those described above, can be made to the television signals receiver subject of the present invention, without for this departing from the novelty principle inherent in the inventive idea, as it is also clear that in the practical embodiment of the invention the materials and forms of the illustrated details can be different, and the same can be substituted with technically equivalent elements.

## Claims

1. Method of processing digital signals inserted during vertical flyback periods in a television signal received by *a* television signals receiver, comprising:
- at least a tuner device (11) for tuning upon choice one from the various receivable television broadcasting stations,
- a decoder (14) for receiving and decoding the digital signals inserted, during the vertical flyback periods, in the received television signal,
- a central unit of control and digital processing (15), connected to the decoder also for analysing the received and decoded digital signals,
- command means (16) for allowing the user to send operative commands to said central unit (15),
- a first non volatile digital memory (17) for storing data, within which it is possible to store the tuning coordinates of a plurality of broadcasting stations; the tuning coordinates of every broadcasting station are associated to a specific station number associated to a broadcasting station and
- a second non volatile digital memory (18) for storing operative instructions for the said central unit (15),
said receiver also comprising or being associated to:
- an image display device (13), or
- a device for recording television programs,
**characterised in that** said second memory (18) contains instructions for causing said central unit to carry out a method of processing the said digital signals according to the following steps:
a) said tuner (11) is commanded to tune into a first receivable broadcasting station,
b) the tuned television signal is examined and it is determined whether it contains digital signals inserted in the vertical flyback periods of the teletext type,
c) in the affirmative case the digital signal of the teletext type is analysed and it is determined whether in said signal a special page is available, identified by a special standardized code, that is an Index page useful for identifying the pages which contain information on television programs,
d) said information is expressed in a standardized manner
e) in the affirmative case said pages are examined and the data contained in such pages is stored,
f) the tuner (11) is commanded to tune into a second receivable broadcasting station, and the previous steps b, c, e are repeated, therefore the tuner is commanded to tune into a third broadcasting station and so up till completion of all the receivable broadcasting stations available,
g) the information stored in this relating way to the television programs provided by the broadcasting stations scanned according to the previous steps are analysed and classified thereby providing a directory in form of a list of television programs obtained by combining the information retrieved from the scanned broadcasting stations and
h) the receiver is pre-set to display on said display device (13), every time that a determined first key or button (M) comprised in said command means (16) is pressed, in particular said key or button which also serves to recall the receiver from the "stand-by" condition, a list of television programs made available by said scanned broadcasting stations, listing them in order beside the relative "tuning program numbers", the coordinates of which have been stored in said first memory (17) as mentioned above.

2. Method of processing digital signals according to claim 1, **characterised in that** said list contains the programs being transmitted the moment in which the said first key (M) is pressed.

3. Method of processing digital signals according to claim 1, **characterised in that** said list is constituted as follows:
- in the first line the date and actual time is indicated;
- in each of the successive lines there are indicated, from left to right, respectively at least:
- the "tuning program number" associated to the broadcasting station,
- the starting time of the program,
- possibly the ending time of the program,
- the program title.

4. Method of processing digital signals according to claim 3. **characterised in that** the colour with which a line of the mentioned list is displayed depends upon the type of program to which it relates (red=film, yellow=sport, white=news, green=variety, etc.).

5. Method of processing digital signals according to claim 4, **characterised in that** a cursor is displayed that can be moved from line to line for selecting the relative program.

6. Method of processing digital signals according to claim 3, **characterised in that** in every line of the mentioned list an indication is also comprised, in full or abbreviated, of the type of program (film, sport, news, various).

7. Method of processing digital signals according to claims 3 or 6, **characterised in that** one of the lines of the list, or a part of which, flashes or is made particularly obvious, for indicating the selected program.

8. Method of processing digital signals according to claim 6, **characterised in that** one of the lines of the list, or a part of which, is of a determined colour (red), for indicating the selected program.

9. Method of processing digital signals receiver, according to one of the previous claims from 5 to 8, **characterised in that** for selecting from the list the line (program) desired, the user can use two appropriate keys comprised in said command means (16), distinguished by two arrows, one facing upwards and one facing downwards.

10. Method of processing digital signals according to claim 2, **characterised in that** pressing one of two appropriate keys (arrow facing to the right or arrow facing to the left) comprised in said command means (16), a list of programs is displayed being successive to or respectively previous to those running **in that** moment.

11. Method of processing digital signals according to claim 1, **characterised in that** pressing a second determined key (P) comprised in said command means (16), the program selected is tuned into and displayed, if it is running, while if it has not yet started, the receiver programs itself to tune into it and display it, in particular with a reasonable anticipation (for instance 5 minutes) from the programmed starting time.

12. Method of processing digital signals according to claim 1, **characterised in that** pressing a third determined key (R) comprised in said command means (16), the receiver programs itself to tune into the program and record it, in particular with a reasonable anticipation (for instance 5 minutes) from the programmed starting time.

13. Method of processing digital signals according to claim 9, **characterised in that** once, on the menu of running programs, a determined program has been selected and that such selection is not changed within a determined time (for instance 3 seconds), the receiver provides for tuning into and displaying automatically the selected program without the necessity of pressing any keys.

14. Method of processing digital signals according to one of the previous claims, **characterised in that** the four arrow keys, comprised in said command means (16) when the receiver is displaying a television program, can serve to respectively change program by increasing (upward arrow) or decreasing (downward arrow) the "tuning program number" and t adjust the volume, reduce (left arrow) or increase (right arrow).

15. Method of processing digital signals according to the previous claims, **characterised in that** when the list of programs is displayed the volume is set to zero (muting).

16. Method of processing digital signals according to one of the previous claims, **characterised in that** when the data relative to a determined broadcasting station is not available in the memory, in the corresponding line, after the program number, the line remains empty, or an explanatory message of the situation is written ("Data not available").

17. Method of processing digital signals according to one of the previous claims, **characterised in that** the receiver can be called from the "stand-by" condition, apart from pressing the said first key (M) also by pressing said second key (P) and in such a case a predetermine program (number 1) is directly tuned into and displayed.

18. Method of processing digital signals according to one of the previous claims, **characterised in that** said command means comprise only 9 keys or buttons: said first key (M), said second key (P), said third key (R), the four arrow keys, the "stand-by" placing key and the "muting" key

19. Method of processing digital signals according to one of the previous claims, **characterised in that** said central unit of control and processing (15) is programmed in a way so as to provide the updating of the memory with only the data relative to television programs relative to the broadcasting stations the coordinates of which have been stored in said first memory (17), repeating the operations of claim 1 at relatively brief determined intervals of time (for example 1 hour) when the receiver is in the "stand-by" condition or when it is in the normal functioning condition.

20. Method of processing digital signals according to the previous claim, **characterised in that** so as to be able to carry out the updating operations of the data in the memory the receiver also comprises a second tuner, which, unless the receiver is simultaneously being used for displaying a program and recording another, is utilised for the updating.

21. Method of processing digital signals according to claim 1, **characterised in that** the information relating the programs, analysed and classified, is stored under the form of a series of "records" each containing various fields.

22. Method of processing digital signals according to claim 12, **characterised in that** each of said "records" contains a given fixed number of "fields" in each of which a text or key is contained.

23. Method of processing digital signals according to claim 22, **characterised in that** the central unit is arranged upon command to carry out searches, with access for all of the said "keys", and to carry out the relative display of the "records" containing the same.

24. Method of processing digital signals according to claim 22, **characterised in that** all of said "records" contain at least the following "fields": title of the program, type of program, starting time, duration, broadcasting station.

25. Method of processing digital signals according to claim 21, **characterised in that** all of said "fields" consist of a number of fixed characters.

26. Method of processing digital signals according to claim 21, **characterised in that** all of said "fields" consist of a number of characters being different from field to field, but the same from record to record for the same field.

27. Method of processing digital signals according to claim 21, **characterised in that** said method of processing of the digital signals contained in the vertical flyback periods is automatically carried out each time the appliance is switched on.

28. Method of processing digital signals according to claim 21, **characterised in that** said method of processing of the digital signals contained in the vertical flyback periods is carried out on following a determined command sent by the user.

29. Method of processing digital signals according to claim 22, **characterised in that** said second memory (18) contains instructions for causing said central unit to carry out, in following a determined command sent by the user, a method of searching and displaying the "records" that the user wishes to consult from among those stored, according to the following steps:
a) the user is asked to indicate the text to be searched and the field of the records from where to search it;
b) one record after another is examined in the indicated field and it is verified whether the text contained within corresponds to that being searched;
c) records are displayed for which the correspondence has been verified.

30. Method of processing digital signals according to claim 29, **characterised in that** on the presented screen of records a cursor is available that the user can move in correspondence to the record desired, and that, pressing an appropriate key, the receiver can be programmed to operate based on the chosen program, on the indicated hour and on the indicated channel.

31. Method of processing digital signals according to claim 1, **characterised in that** said determined even is the connection/disconnection of part of the receiver to or from the mains supply.

32. Method of processing digital signals according to claim 1, **characterised in that** said special page, identified by a determined number is identified by a number containing a number being at least greater than 9.

33. Method of processing digital signals according to one of the previous claims, **characterised in that** said central unit of control and processing (15) is programmed so as to provide for the updating in the memory of the data relative to the television programs of all the receivable broadcasting stations, repeating the operations of claim 1 at relatively long intervals of time (for instance once a day).

34. Method of processing digital signals according to claim 11 or 12, **characterised in that**, when said second determined key (P) or said third determined key (R) is pressed, and the program selected has not yet started, and the V.P.S. code is present, the receiver programs itself to tune into it and display, or respectively record, it, using the relevant V.P.S. information in order to know exactly the starting and finishing time of the program.

35. Method of processing digital signals according to claim 11 or 12, **characterised in that**, when said second determined key (P) or said third determined key (R) is pressed, and it is forecasted that the program selected will be interrupted by a different program and then resumed, provision is made in order that the user can decide whether he or she wants that the selected program (container program) remains selected until the final end or until the interruption.

36. Method of processing digital signals according to claim 35, **characterised in that**, in the case that the program selected will be interrupted by a different program and then resumed, for selecting the possibility that the program remains selected until its final end a double pressing of a determined key (M,R,P) is provided.

37. Television signals receiver implementing a method of processing digital signals inserted during vertical flyback periods in a received television signal, comprising:
- at least a tuner device (11) for tuning upon choice one from the various receivable television broadcasting stations,
- a decoder (14) for receiving and decoding the digital signals inserted, during the vertical flyback periods, in the received television signal,
- a central unit of control and digital processing (15), connected to the decoder also for analysing the received and decoded digital signals,
- command means (16) for allowing the user to send operative commands to said central unit (15),
- a first non volatile digital memory (17) for storing data, within which it is possible to store the tuning coordinates of a plurality of broadcasting stations; the tuning coordinates of every broadcasting station are associated to a specific station number associated to a broadcasting station and
- a second non volatile digital memory (18) for storing operative instructions for the said central unit (15),
said receiver also comprising or being associated to:
- an image display device (13), or
- a device for recording television programs,
**characterised in that** in said second memory (18) are stored instructions for causing said central unit to process the said digital signals according to the following steps:
a) said tuner (11) is commanded to tune into a first receivable broadcasting station,
b) the tuned television signal is examined and it is determined whether it contains digital signals inserted in the vertical flyback periods of the teletext type,
c) in the affirmative case the digital signal of the teletext type is analysed and it is determined whether in said signal a special page is available, identified by a special standardized code, that is an index page useful for identifying the pages which contain information on television programs,
d) said information is expressed in a standardized manner
e) in the affirmative case said pages are examined and the data contained in such pages is stored.
f) the tuner (11) is commanded to tune into a second receivable broadcasting station, and the previous steps b, c, e are repeated, therefore the tuner is commanded to tune into a third broadcasting station and so up till completion of all the receivable broadcasting stations available,
g) the information stored in this way relating to the television programs provided by the broadcasting stations scanned according to the previous steps are analysed and classified thereby providing a directory in form of a list of television programs obtained by combining the information retrieved from the scanned broadcasting stations and
h) the receiver is pre-set to display on said display device (13), every time that a determined first key or button (M) comprised in said command means (16) is pressed, in particular said key or button which also serves to recall the receiver from the "stand-by" condition, a list of television programs made available by said scanned broadcasting stations, listing them in order beside the relative "tuning program numbers", the coordinates of which have been stored in said first memory (17) as mentioned above.

## Patentansprüche

1. *Verfahren zur Verarbeitung von Digitalsignalen, die während der vertikalen Rücklaufzeiten in ein durch einen Femsehsignalempfänger empfangenes Fernsehsignal eingefügt sind, umfassend:*
- mindestens eine Tunervorrichtung (11) zur Einstellung¹ auf eine der verschiedenen empfangbaren Fernsehstationen nach Wahl,
- einen Decoder (14) zum Empfangen und Decodieren der während der vertikalen Rücklaufzeiten in das empfangene Fernsehsignal eingefügten Digitalsignale,
- eine Zentraleinheit zur Steuerung und digitalen Verarbeitung (15), verbunden mit dem Decoder ebenfalls zur Auswertung der empfangenen, decodierten Signale,
- ein Eingabemittel² (16), das es dem Nutzer gestattet, Bedienungs-Befehle an die Zentraleinheit zu senden (15),
- ein erster, nicht flüchtiger Digitalspeicher (17) zur Datenspeicherung, in dem das Speichern der Empfangsinformationen einer Vielzahl von Fernsehstationen möglich ist; wobei die Empfangsinformationen einer jeden Femsehstation einer bestimmten Stationsnummer zugeordnet sind, die einer Fernsehstation zugeordnet ist, und
- ein zweiter, nicht flüchtiger Digitalspeicher (18) zur Speicherung von Bedienungs-Befehlen für die Zentraleinheit (15),
wobei der Empfänger umfasst oder ist verbunden mit:
- einer Bildanzeigevorrichtung (13) oder
- eine Vorrichtung zur Aufnahme von Fernsehprogrammen,
**dadurch gekennzeichnet, dass** der zweite Speicher (18) Befehle umfasst, um zu bewirken, dass die Zentraleinheit ein Verfahren zur Verarbeitung der Digitalsignale gemäß folgenden Schritten ausführt:
a) der Tuner (11) wird so gesteuert, dass er sich auf die erste empfangbare Fernsehstation einstellt,
b) das eingestellte Fernsehsignal wird untersucht und darauf geprüft, ob es in die vertikalen Rücklaufzeiten eingefügte Digitalsignale des Videotext-Typs enthält,
c) in positivem Fall wird das Digitalsignal des Videotext-Typs ausgewertet und darauf geprüft, ob in dem Signal eine spezielle Seite, die durch einen speziellen, genormten Code identifiziert wird, verfügbar ist, bei der es sich um eine Inhaltsseite zur Identifizierung der Seiten handelt, die Informationen über Fernsehprogramme enthalten,
d) diese Informationen werden auf eine genormte Weise ausgedrückt,
e) in positivem Fall werden die Seiten untersucht und die in den Seiten enthaltenen Daten gespeichert,
¹ wir haben das modernere Wort statt "Abstimmung" genommen, auch weil es sonst an anderen Stellen des Textes nicht passt (A.d.Ü.)
² Sammelbegriff im Ausgangstext, jedoch Singular
f) der Tuner (11) wird so gesteuert, dass er sich auf eine zweite empfangbare Fernsehstation einstellt, die vorherigen Schritte b, c, e werden wiederholt, anschließend wird der Tuner so gesteuert, dass er sich auf eine dritte Fernsehstation einstellt und so weiter bis zur Ausschöpfung aller empfangbaren, verfügbaren Fernsehstationen,
g) die auf diese Weise gespeicherten Informationen zu den durch die Fernsehstationen gelieferten Fernsehprogrammen, die gemäß den oben genannten Schritten abgetastet wurden, werden ausgewertet und sortiert, wobei ein Verzeichnis in Form einer Liste von Fernsehprogrammen bereitgestellt wird, das durch Kombinierung der Informationen aus den abgetasteten Fernsehstationen entsteht, und
h) der Empfänger ist auf die Anzeige einer Liste der durch die abgetasteten Fernsehstationen bereitgestellten Fernsehprogramme auf der Anzeigevorrichtung (13) vorprogrammiert, jedes Mal, wenn eine/ein bestimmte/r, in dem Eingabemittel (16) enthaltene/r erste/r Taste oder Schalter (M), insbesondere die Taste oder der Schalter, die/der zum Aktivieren des Empfängers aus der "Betriebsbereitschaft" dient, gedrückt wird, wobei die Fernsehprogramme der Reihe nach, neben den entsprechenden "Empfangs-Programmnummern", die in dem ersten Speicher (17) wie oben beschrieben gespeichert wurden, aufgelistet werden.

2. Verfahren zur Verarbeitung von Digitalsignalen nach Anspruch 1, **dadurch gekennzeichnet, dass** die Liste die Programme umfasst, die gerade gesendet werden, wenn die erste Taste (M) gedrückt wird.

3. Verfahren zur Verarbeitung von Digitalsignalen nach Anspruch 1, **dadurch gekennzeichnet, dass** sich die Liste wie folgt zusammensetzt:
- in der ersten Zeile sind Datum und aktuelle Uhrzeit angegeben
- jede der folgenden Zeilen enthält, von links nach rechts, folgende Angaben:
- die der Fernsehstation zugeordnete "Empfangs-Programmnummer",
- die Anfangszeit des Programms
- möglichst die Endzeit des Programms
- die Programmbezeichnung.

4. Verfahren zur Verarbeitung von Digitalsignalen nach Anspruch 3, **dadurch gekennzeichnet, dass** die Farbe, mit der eine Zeile der besagten Liste angezeigt wird, von dem Programmtyp abhängt, den diese Zeile betrifft (rot = Film, gelb = Sport, Weiß = Nachrichten, Grün = Unterhaltung³ usw.)

5. Verfahren zur Verarbeitung von Digitalsignalen nach Anspruch 4, **dadurch gekennzeichnet, dass** ein Cursor angezeigt wird, der sich von Zeile zu Zeile zur Auswahl des entsprechenden Programms bewegen lässt.

6. Verfahren zur Verarbeitung von Digitalsignalen nach Anspruch 3, **dadurch gekennzeichnet, dass** jede Zeile der besagten Liste auch eine - ausgeschriebene oder abgekürzte - Angabe über den Programmtyp (Film, Sport, Nachrichten, Sonstiges) umfasst.

7. Verfahren zur Verarbeitung von Digitalsignalen nach Anspruch 3 oder 6, **dadurch gekennzeichnet, dass** eine der Zeilen der Liste oder eines Teils der Liste zur
³ vgl. Anspruch 6, es könnte auch "Sonstiges" gemeint sein (A.d.Ü.) Anzeige des ausgewählten Programms blinkt oder besonders hervorgehoben wird.

8. Verfahren zur Verarbeitung von Digitalsignalen nach Anspruch 6, **dadurch gekennzeichnet, dass** eine der Zeilen der Liste oder eines Teils der Liste eine bestimmte Farbe (rot) zur Anzeige des ausgewählten Programms aufweist.

9. Verfahren zur Verarbeitung von Digitalsignalen nach einem der Ansprüche 5 bis 8, **dadurch gekennzeichnet, dass** der Nutzer, zur Auswahl der gewünschten Zeile (des gewünschten Programms) auf der Liste, zwei entsprechende, in dem Eingabemittel (16) enthaltene Tasten verwenden kann, die durch zwei Pfeile - einer nach oben und einer nach unten gerichtet - **gekennzeichnet** sind.

10. Verfahren zur Verarbeitung von Digitalsignalen nach Anspruch 2, **dadurch gekennzeichnet, dass** durch Drücken einer oder zwei entsprechenden, in dem Eingabemittel (16) enthaltenen Tasten (Pfeil nach rechts oder Pfeil nach links), eine Liste von Programmen angezeigt wird, die auf die zur Zeit laufenden Programme aufeinanderfolgen bzw. diesen vorhergehen.

11. Verfahren zur Verarbeitung von Digitalsignalen nach Anspruch 1, **dadurch gekennzeichnet, dass** durch Drücken einer zweiten bestimmten, in dem Eingabemittel (16) enthaltenen Taste (P), das ausgewählte Programm eingestellt und angezeigt wird, wenn es läuft; hat das ausgewählte Programm jedoch noch nicht angefangen, wird der Empfänger so programmiert, dass er sich auf es einstellt und anzeigt, insbesondere mit einer angemessenen Vorlaufzeit (z.B. 5 Minuten) vor der vorgesehenen Anfangszeit.

12. Verfahren zur Verarbeitung von Digitalsignalen nach Anspruch 9, **dadurch gekennzeichnet, dass** durch Drücken einer dritten bestimmten, in dem Eingabemittel (16) enthaltenen Taste (R), der Empfänger so programmiert wird, dass er sich auf das Programm einstellt und es aufnimmt, insbesondere mit einer angemessenen Vorlaufzeit (z.B. 5 Minuten) vor der vorgesehenen Anfangszeit.

13. Verfahren zur Verarbeitung von Digitalsignalen nach Anspruch 9, **dadurch gekennzeichnet, dass**, nachdem ein bestimmtes Programm auf dem Menü der laufenden Programme ausgewählt wurde und diese Auswahl innerhalb einer bestimmten Zeit (z.B. 3 Sekunden) nicht geändert wird, der Empfänger sich auf das ausgewählte Programm automatisch einstellt und es anzeigt, ohne dass irgendwelche Tasten betätigt werden müssen.

14. Verfahren zur Verarbeitung von Digitalsignalen nach einem der vorherigen Ansprüche, **dadurch gekennzeichnet, dass**, wenn der Empfänger ein Fernsehprogramm gerade anzeigt, die vier in dem Eingabemittel (16) enthaltenen Pfeiltasten dazu dienen können, das Programm durch Erhöhung (Pfeil nach oben) oder Verminderung (Pfeil nach unten) der "Empfangs-Programmnummer" zu wechseln bzw. die Lautstärke durch Erhöhung (Pfeil nach links) oder Verminderung (Pfeil nach rechts) einzustellen.

15. Verfahren zur Verarbeitung von Digitalsignalen nach einem der vorherigen Ansprüche, **dadurch gekennzeichnet, dass** die Lautstärke während der Anzeige der Programmliste unterdrückt wird (Stummschaltung).

16. Verfahren zur Verarbeitung von Digitalsignalen nach einem der vorherigen Ansprüche, **dadurch gekennzeichnet, dass**, wenn die Daten zu einer bestimmten Fernsehstation im Speicher - auf der entsprechenden Zeile, nach der Programmnummer - nicht verfügbar sind, die Zeile leer bleibt oder eine erläuternde Meldung ("Daten nicht verfügbar") ausgegeben wird.

17. Verfahren zur Verarbeitung von Digitalsignalen nach einem der vorherigen Ansprüche, **dadurch gekennzeichnet, dass** sich der Empfänger aus der "Betriebsbereitschaft" nicht nur durch Betätigung der ersten Taste (M), sondern auch durch Betätigung der zweiten Taste (P) aktivieren lässt, wobei in diesem Fall ein vorbestimmtes Programm (Nummer 1) direkt eingestellt und angezeigt wird.

18. Verfahren zur Verarbeitung von Digitalsignalen nach einem der vorherigen Ansprüche, **dadurch gekennzeichnet, dass** das Eingabemittel nur 9 Tasten oder Schalter enthält: die erste Taste (M), die zweite Taste (P), die dritte Taste (R), die vier Pfeiltasten, die Taste zum Einleiten der "Betriebsbereitschaft" und die "Stumm"-Taste.

19. Verfahren zur Verarbeitung von Digitalsignalen nach einem der vorherigen Ansprüche, **dadurch gekennzeichnet, dass** die Zentraleinheit zur Steuerung und Verarbeitung (15) so programmiert ist, dass sie die Aktualisierung des Speichers lediglich mit den Daten zu den Fernsehprogrammen der Fernsehstationen bewirkt, deren Informationen in dem ersten Speicher (17) gespeichert wurden, wobei die Schritte von Anspruch 1 in relativ kurzen bestimmten Zeitintervallen (z.B. 1 Stunde) wiederholt werden, wenn sich der Empfänger in "Betriebsbereitschaft" oder in normalem Betriebszustand befindet.

20. Verfahren zur Verarbeitung von Digitalsignalen nach dem vorherigen Anspruch, **dadurch gekennzeichnet, dass** der Empfänger, um das Verfahren der Aktualisierung der Daten in dem Speicher ausführen zu können, einen zweiten Tuner umfasst, der für die Aktualisierung verwendet wird, es sei denn, der Empfänger wird gleichzeitig zur Anzeige eines Programms und Aufnahme eines anderen verwendet.

21. Verfahren zur Verarbeitung von Digitalsignalen nach Anspruch 1, **dadurch gekennzeichnet, dass** die ausgewerteten und klassifizierten Informationen zu den Programmen in der Form einer Reihe von "Datensätzen" gespeichert werden, die jeweils verschiedene Felder umfassen.

22. Verfahren zur Verarbeitung von Digitalsignalen nach Anspruch 12, **dadurch gekennzeichnet, dass** jeder "Datensatz" eine vorbestimmte Anzahl von "Feldern" umfasst, die jeweils einen Text oder Schlüssel enthalten.

23. Verfahren zur Verarbeitung von Digitalsignalen nach Anspruch 22, **dadurch gekennzeichnet, dass** die Zentraleinheit zur Ausführung von Suchoperationen auf Befehl, mit Zugang für alle besagten "Schlüssel", sowie zur Ausführung der entsprechenden Anzeige der "Datensätze", die die gleichen enthalten, ausgestaltet ist.

24. Verfahren zur Verarbeitung von Digitalsignalen nach Anspruch 22, **dadurch gekennzeichnet, dass** alle besagten "Datensätze" mindestens folgende "Felder" enthalten: Programmbezeichnung, Programmtyp, Anfangszeit, Dauer, Fernsehstation.

25. Verfahren zur Verarbeitung von Digitalsignalen nach Anspruch 21, **dadurch gekennzeichnet, dass** alle besagten "Felder" aus einer Anzahl von feststehenden Zeichen bestehen.

26. Verfahren zur Verarbeitung von Digitalsignalen nach Anspruch 21, **dadurch gekennzeichnet, dass** alle besagten "Felder" aus einer Anzahl von Zeichen bestehen, die von Feld zu Feld unterschiedlich ist, jedoch für dasselbe Feld von Datensatz zu Datensatz gleich ist.

27. Verfahren zur Verarbeitung von Digitalsignalen nach Anspruch 21, **dadurch gekennzeichnet, dass** das Verfahren zur Verarbeitung der in den vertikalen Rücklaufzeiten enthaltenen Digitalsignale jedes Mal automatisch ausgeführt wird, wenn das Gerät eingeschaltet wird.

28. Verfahren zur Verarbeitung von Digitalsignalen nach Anspruch 21, **dadurch gekennzeichnet, dass** das Verfahren zur Verarbeitung der in den vertikalen Rücklaufzeiten enthaltenen Digitalsignale infolge eines bestimmten, durch den Nutzer gesendeten Befehls ausgeführt wird.

29. Verfahren zur Verarbeitung von Digitalsignalen nach Anspruch 22, **dadurch gekennzeichnet, dass** der zweite Speicher (18) Befehle umfasst, um zu bewirken, dass die Zentraleinheit infolge eines bestimmten, durch den Nutzer gesendeten Befehls ein Verfahren zur Suche und Anzeige der "Datensätze", die der Nutzer unter den gespeicherten einsehen möchte, gemäß folgenden Schritten ausführt:
a) der Nutzer wird aufgefordert, den zu suchenden Text und das Feld der Datensätze, im dem die Suche erfolgen soll, anzugeben;
b) in dem angegebenen Feld werden die Datensätze ein nach dem anderen untersucht und darauf geprüft, ob der darin enthaltene Text mit dem gesuchten Text übereinstimmt;
c) es werden die Datensätze angezeigt, bei denen eine Übereinstimmung festgestellt wurde.

30. Verfahren zur Verarbeitung von Digitalsignalen nach Anspruch 29, **dadurch gekennzeichnet, dass** ein Cursor in der dargebotenen Anzeige der Datensätze verfügbar ist, den der Nutzer entsprechend dem gewünschten Datensatz bewegen kann, und dass der Empfänger auf den Betrieb mit dem ausgewählten Programm, zur angegebenen Uhrzeit und auf dem angegebenen Kanal, bei Betätigung einer entsprechenden Taste programmiert werden kann.

31. Verfahren zur Verarbeitung von Digitalsignalen nach Anspruch 1, **dadurch gekennzeichnet, dass** das bestimmte Ereignis die Verbindung/Trennung eines Teils des Empfängers mit oder von dem Hauptversorgungsnetz ist.

32. Verfahren zur Verarbeitung von Digitalsignalen nach Anspruch 1, **dadurch gekennzeichnet, dass** die spezielle, durch eine bestimmte Nummer identifizierte Seite durch eine Nummer identifiziert wird, die eine mindestens über 9 liegende Zahl enthält.

33. Verfahren zur Verarbeitung von Digitalsignalen nach einem der vorherigen Ansprüche, **dadurch gekennzeichnet, dass** die Zentraleinheit zur Steuerung und Verarbeitung (15) so programmiert ist, dass sie die Aktualisierung in dem Speicher der Daten zu den Fernsehprogrammen aller empfangbaren Fernsehstationen bewirkt, wobei die Schritte von Anspruch 1 in relativ langen Zeitintervallen (z.B. einmal täglich) wiederholt werden.

34. Verfahren zur Verarbeitung von Digitalsignalen nach Anspruch 11 oder 12, **dadurch gekennzeichnet, dass**, wenn die zweite bestimmte Taste (P) oder die dritte bestimmte Taste (R) gedrückt wird und das ausgewählte Programm noch nicht angefangen hat, bei Verfügbarkeit eines VPS-Codes der Empfänger so programmiert wird, dass er sich auf es einstellt und es anzeigt bzw. aufnimmt, wobei der Empfänger die VPS-Informationen zur genauen Bestimmung der Anfangs- und Endzeit des Programms verwendet.

35. Verfahren zur Verarbeitung von Digitalsignalen nach Anspruch 11 oder 12, **dadurch gekennzeichnet, dass**, wenn die zweite bestimmte Taste (P) oder die dritte bestimmte Taste (R) gedrückt wird und eine Unterbrechung des ausgewählten Programms durch ein anderes Programm und dann die Fortsetzung des ersteren vorausgesagt wird, die Möglichkeit besteht, dass der Nutzer entscheiden kann, ob das ausgewählte (zu unterbrechende) Programm bis zum Ende oder nur bis zur Unterbrechung eingestellt bleiben soll.

36. Verfahren zur Verarbeitung von Digitalsignalen nach Anspruch 35, **dadurch gekennzeichnet, dass**, wenn das ausgewählte Programm durch ein anderes Programm unterbrochen und dann fortgesetzt wird, das Doppeldrücken einer bestimmten Taste (M, R, P) zur Auswahl der Möglichkeit, dass das Programm bis zum Ende eingestellt bleibt, vorgesehen ist.

37. Fernsehsignalempfänger zur Ausführung eines Verfahrens zur Verarbeitung von Digitalsignalen, die während der vertikalen Rücklaufzeiten in ein empfangenes Fernsehsignal eingefügt sind, umfassend:
- mindestens eine Tunervorrichtung (11) zur Einstellung auf eine der verschiedenen empfangbaren Fernsehstationen nach Wahl,
- einen Decoder (14) zum Empfangen und Decodieren der während der vertikalen Rücklaufzeiten in das empfangene Fernsehsignal eingefügten Digitalsignale,
- eine Zentraleinheit zur Steuerung und digitalen Verarbeitung (15), verbunden mit dem Decoder ebenfalls zur Auswertung der empfangenen, decodierten Signale,
- ein Eingabemittel (16), das es dem Nutzer gestattet, Bedienungs-Befehle an die Zentraleinheit zu senden (15),
- ein erster, nicht flüchtiger Digitalspeicher (17) zur Datenspeicherung, in dem das Speichern der Empfangsinformationen einer Vielzahl von Fernsehstationen möglich ist; wobei die Empfangsinformationen einer jeden Fernsehstation einer bestimmten Stationsnummer zugeordnet sind, die einer Fernsehstation zugeordnet ist, und
- ein zweiter, nicht flüchtiger Digitalspeicher (18) zur Speicherung von Bedienungs-Befehlen für die Zentraleinheit (15),
wobei der Empfänger umfasst oder ist verbunden mit:
- einer Bildanzeigevorrichtung (13) oder
- eine Vorrichtung zur Aufnahme von Fernsehprogrammen,
**dadurch gekennzeichnet, dass** in dem zweiten Speicher (18) Befehle gespeichert sind, um zu bewirken, dass die Zentraleinheit die Digitalsignale gemäß folgenden Schritten verarbeitet:
a) der Tuner (11) wird so gesteuert, dass er sich auf die erste empfangbare Fernsehstation einstellt,
b) das eingestellte Fernsehsignal wird untersucht und darauf geprüft, ob es in die vertikalen Rücklaufzeiten eingefügte Digitalsignale des Videotext-Typs enthält,
c) in positivem Fall wird das Digitalsignal des Videotext-Typs abgetastet und darauf geprüft, ob in dem Signal eine bestimmte Seite, die durch einen speziellen, genormten Code identifiziert wird, verfügbar ist, bei der es sich um eine Inhaltsseite zur Identifizierung der Seiten handelt, die Informationen über Fernsehprogramme enthalten,
d) diese Informationen werden auf eine genormte Weise ausgedrückt,
e) in positivem Fall werden die Seiten untersucht und die in den Seiten enthaltenen Daten gespeichert,
f) der Tuner (11) wird so gesteuert, dass er sich auf eine zweite empfangbare Fernsehstation einstellt, die vorherigen Schritte b, c, e werden wiederholt, anschließend wird der Tuner so gesteuert, dass er sich auf eine dritte Fernsehstation einstellt und so weiter bis zur Ausschöpfung aller empfangbaren, verfügbaren Fernsehstationen.
g) die auf diese Weise gespeicherten Informationen zu den durch die Fernsehstationen gelieferten Fernsehprogrammen, die gemäß den oben genannten Schritten abgetastet wurden, werden ausgewertet und sortiert, wobei ein Verzeichnis in Form einer Liste von Fernsehprogrammen, die durch Kombinierung der Informationen aus den abgetasteten Fernsehstationen erhalten wird, bereitgestellt wird, und
h) der Empfänger ist auf die Anzeige einer Liste der durch die abgetasteten Fernsehstationen bereitgestellten Fernsehprogramme auf der Anzeigevorrichtung (13) vorprogrammiert, jedes Mal, wenn eine/ein bestimmte/r, in dem Eingabemittel (16) enthaltene erste Taste oder Schalter (M), insbesondere die Taste oder der Schalter, die/der zum Einschalten des Empfängers aus der "Betriebsbereitschaft" dient, gedrückt wird, wobei die Fernsehprogramme der Reihe nach, neben den entsprechenden "Empfangs-Programmnummern", die in dem ersten Speicher (17) wie oben beschrieben gespeichert wurden, aufgelistet werden.

## Revendications

1. Méthode de traitement des signaux numériques insérés pendant les périodes de retour du spot vertical dans un signal de télévision reçu par un récepteur de signaux de télévision comprenant :
- au moins un dispositif de syntonisation (11) pour régler au choix une des diverses stations émettrices de télévision recevables,
- un décodeur (14) pour recevoir et décoder les signaux numériques insérés, pendant les périodes de retour du spot vertical, dans le signal de télévision reçu,
- une unité centrale de contrôle et de traitement numérique (15), connectée au décodeur, également pour analyser les signaux numériques reçus et décodés,
- un moyen de commande (16) pour permettre à l'utilisateur d'envoyer des commandes opérationnelles à ladite unité centrale (15),
- une première mémoire numérique non volatile (17) pour stocker des données, dans laquelle il est possible de stocker les coordonnées de syntonisation d'une pluralité de stations émettrices ; *les coordonnées de syntonisation de chaque station émettrice est associée à un numéro d'émetteur spécifique, associé à une station émettrice,* et
- une deuxième mémoire numérique non volatile (18) pour stocker des instructions opérationnelles pour ladite unité centrale (15),
ledit récepteur comprenant également ou étant associé à :
- un dispositif d'affichage de l'image (13), *ou*
- un dispositif d'enregistrement des programmes de télévision,
**caractérisée en ce que** ladite deuxième mémoire (18) contient des instructions afin que ladite unité centrale exécute une méthode de traitement desdits signaux numériques conformément aux étapes suivantes :
a) ledit syntoniseur (11) est commandé pour être réglé sur une première station émettrice recevable,
b) le signal de télévision réglé est examiné et il est déterminé s'il contient des signaux numériques insérés dans les périodes de retour du spot vertical, du type télétexte,
c) dans le cas affirmatif, the signal numérique de type télétexte est analysé et il est déterminé si, dans ledit signal, une page spéciale est disponible, identifiée par un *code standardisé spécial,* laquelle page est une page de sommaire utile pour identifier les pages contenant les informations sur les programmes de télévision,
d) lesdites informations sont exprimées d'une façon standardisée
e) dans le cas affirmatif, lesdites pages sont examinées et les données contenues dans ces pages sont stockées,
f) le syntoniseur (11) est commandé pour être réglé sur une deuxième station émettrice recevable, et les étapes précédentes b, c, e sont répétées, puis le syntoniseur est commandé pour être réglé sur une troisième station émettrice, et ainsi jusqu'à pour toutes les stations émettrices disponibles,
g) les informations stockées de cette manière concernant les programmes de télévision fournis par les stations émettrices balayées conformément aux étapes précédentes sont analysées et classées de cette façon, fournissant un répertoire sous la forme d'une liste des programmes de télévision obtenus par la combinaison des informations extraites des stations émettrices balayées, et
h) le récepteur est préréglé pour afficher sur ledit dispositif d'affichage (13), à chaque fois qu'on appuie sur une première touche ou sur un bouton (M) déterminé compris dans ledit moyen de commande (16), en particulier ladite touche ou ledit bouton servant aussi à rappeler le récepteur à partir de l'état de veille, une liste des programmes de télévision rendus disponibles par lesdites stations émettrices balayées, les classant dans l'ordre à côté des « numéros de réglage des programmes », dont les coordonnées ont été enregistrées dans ladite première mémoire (17), conformément à ce qui est mentionné ci-dessus.

2. Méthode de traitement des signaux numériques selon la revendication 1, **caractérisée en ce que** ladite liste contient les programmes étant en cours de transmission au moment où on appuie sur ladite première touche (M).

3. Méthode de traitement des signaux numériques selon la revendication 1, **caractérisée en ce que** ladite liste est constituée de la façon suivante :
- dans la première ligne sont indiquées l'heure et la date actuelles ;
- dans chacune des lignes successives sont indiqués respectivement, de gauche à droite, au moins :
- le « numéro de réglage des programmes » associé à la station émettrice,
- l'heure du début du programme,
- éventuellement l'heure de la fin du programme,
- le titre du programme.

4. Méthode de traitement des signaux numériques selon la revendication 3, **caractérisée en ce que** la couleur de laquelle une ligne de la liste mentionnée est affichée dépend du type de programme auquel il se rapporte (rouge = film, jaune = sport, blanc = informations, vert = variétés, etc.).

5. Méthode de traitement des signaux numériques selon la revendication 4, **caractérisée en ce qu'**un curseur est affiché, ce curseur pouvant être déplacé de ligne en ligne pour sélectionner le programme correspondant.

6. Méthode de traitement des signaux numériques selon la revendication 3, **caractérisée en ce que**, dans toutes les lignes de la liste mentionnée, une indication est comprise, en toutes lettres ou abrégée, du type de programme (film, sport, informations, varié).

7. Méthode de traitement des signaux numériques selon la revendication 3 ou 6, **caractérisée en ce qu'**une des lignes de la liste, ou une partie de celle-ci, clignote ou est rendue particulièrement visible pour indiquer le programme sélectionné.

8. Méthode de traitement des signaux numériques selon la revendication 6, **caractérisée en ce qu'**une des lignes de la liste, ou une partie de celle-ci, est d'une couleur déterminée (rouge) pour indiquer le programme sélectionné.

9. Méthode de traitement des signaux numériques selon une des précédentes revendications de 5 à 8, **caractérisée en ce que**, pour sélectionner dans la liste la ligne (le programme) désirée, l'utilisateur peut utiliser deux touches appropriées comprises sur ledit moyen de commande (16), distinguées par deux flèches, l'une pointant vers le haut et l'autre pointant vers le bas.

10. Méthode de traitement des signaux numériques selon la revendication 2, **caractérisée en ce que**, en appuyant sur une des deux touches appropriées (flèche pointant vers la droite ou flèche pointant vers la gauche) comprises sur ledit moyen de commande (16), une liste des programmes suivant ou précédant respectivement ceux diffusés à ce moment-là est affichée.

11. Méthode de traitement des signaux numériques selon la revendication 1, **caractérisée en ce que**, en appuyant sur une deuxième touche déterminée (P) comprise sur ledit moyen de commande (16), le programme sélectionné est réglé et affiché s'il est en cours de diffusion, alors que si le programme n'a pas encore commencé, le récepteur se programme lui-même pour se régler sur le programme et pour l'afficher, en particulier avec une anticipation raisonnable (de cinq minutes par exemple) sur l'heure du début programmée.

12. Méthode de traitement des signaux numériques selon la revendication 1, **caractérisée en ce que**, en appuyant sur une troisième touche déterminée (R) comprise sur ledit moyen de commande (16), le récepteur se programme lui-même pour se régler sur le programme et l'enregistrer, en particulier avec une anticipation raisonnable (de cinq minutes par exemple) sur l'heure du début programmée.

13. Méthode de traitement des signaux numériques selon la revendication 9, **caractérisée en ce que**, sur le menu des programmes en cours de diffusion, un programme déterminé a été sélectionné et que cette sélection n'est pas modifiée pendant un lapse de temps déterminé (par exemple trois secondes), le récepteur fait le nécessaire pour régler et afficher automatiquement le programme sélectionné sans qu'il soit nécessaire d'appuyer sur une touche.

14. Méthode de traitement des signaux numériques selon une des revendications précédentes, **caractérisée en ce que**, quand le récepteur affiche un programme de télévision, les quatre touches fléchées comprises sur ledit moyen de commande (16) peuvent respectivement servir à changer le programme en augmentant (flèche vers le haut) ou en diminuant (flèche vers le bas) le « numéro de réglage des programmes » et à ajuster le volume en le diminuant (flèche vers la gauche) ou en l'augmentant (flèche vers la droite).

15. Méthode de traitement des signaux numériques selon les revendications précédentes, **caractérisée en ce que**, quand la liste de programmes est affichée, le volume est réglé sur zéro (mode muet).

16. Méthode de traitement des signaux numériques selon une des revendications précédentes, **caractérisée en ce que**, quand les données correspondant à une station émettrice déterminée ne sont pas disponibles dans la mémoire, la ligne reste vide ou un message explicatif de la situation (« Données non disponibles ») s'inscrit dans la ligne correspondante après le numéro du programme.

17. Méthode de traitement des signaux numériques selon une des revendications précédentes, **caractérisée en ce que** le récepteur peut être rappelé de l'état de veille, outre par l'appui de ladite première touche (M), également en appuyant la deuxième touche (P) et dans ce cas, un programme prédéterminé (numéro 1) est directement réglé et affiché.

18. Méthode de traitement des signaux numériques selon une des revendications précédentes, **caractérisée en ce que** ledit moyen de commande comprend neuf touches ou boutons : ladite première touche (M), ladite deuxième touche (P), ladite troisième touche (R), les quatre touches fléchées, la touche de mise en veille et la touche de mode muet.

19. Méthode de traitement des signaux numériques selon une des revendications précédentes, **caractérisée en ce que** ladite unité centrale de contrôle et de traitement (15) est programmée de façon à exécuter la mise à jour de la mémoire uniquement avec les données concernant les programmes de télévision relatifs aux stations émettrices, les coordonnées de celles-ci ayant été enregistrées dans ladite première mémoire (17), en répétant les opérations de la revendication 1 à des intervalles de temps relativement brefs (par exemple une heure) quand le récepteur est en état de veille ou quand il est en état normal de fonctionnement.

20. Méthode de traitement des signaux numériques selon la revendication précédente, **caractérisée en ce que**, afin d'être en mesure d'exécuter les opérations de mise à jour des données dans la mémoire, le récepteur comprenne aussi un deuxième syntoniseur qui, à moins que le récepteur soit utilisé simultanément pour afficher un programme et en enregistrer un autre, est utilisé pour la mise à jour.

21. Méthode de traitement des signaux numériques selon la revendication 1, **caractérisée en ce que** les informations concernant les programmes, analysées et classées, sont stockées sous la forme d'une série d'« articles » contenant chacun des champs divers.

22. Méthode de traitement des signaux numériques selon la revendication 12, **caractérisée en ce que** chacun desdits « articles » contient un nombre donné fixe de « champs », un texte ou une clé étant contenue dans chaque champ.

23. Méthode de traitement des signaux numériques selon la revendication 22, **caractérisée en ce que** l'unité centrale exécute sur commande des recherches avec un accès pour toutes lesdites « clés », et pour afficher en relation les « articles » contenant la même clé.

24. Méthode de traitement des signaux numériques selon la revendication 22, **caractérisée en ce que** tous lesdits « articles » contiennent au moins les « champs » suivants : titre du programme, type de programme, heure du début, durée, station émettrice.

25. Méthode de traitement des signaux numériques selon la revendication 21, **caractérisée en ce que** tous lesdits « champs » consistent en un nombre de caractères fixés.

26. Méthode de traitement des signaux numériques selon la revendication 21, **caractérisée en ce que** tous lesdits « champs » consistent en un nombre de caractères qui est différent de champ à champ, mais qui est identique d'article en article pour le même champ.

27. Méthode de traitement des signaux numériques selon la revendication 21, **caractérisée en ce que** ladite méthode de traitement des signaux numériques contenus dans les périodes de retour du spot vertical est automatiquement exécutée à chaque fois que l'appareil est allumé.

28. Méthode de traitement des signaux numériques selon la revendication 21, **caractérisée en ce que** ladite méthode de traitement des signaux numériques contenus dans les périodes de retour du spot vertical est exécutée à la suite d'une commande déterminée envoyée par l'utilisateur.

29. Méthode de traitement des signaux numériques selon la revendication 22, **caractérisée en ce que** ladite deuxième mémoire (18) contient des instructions pour faire exécuter à ladite unité centrale, en exécutant une commande déterminée envoyée par l'utilisateur, une méthode de recherche et d'affichage des « articles » que l'utilisateur souhaite consulter parmi ceux enregistrés, conformément aux étapes suivantes :
a) il est demandé à l'utilisateur d'indiquer le texte à rechercher et le champ des articles dans lesquels la recherche est à effectuer ;
b) les articles sont examinés l'un après l'autre dans le champ indiqué et il est vérifié si le texte contenu correspond à celui recherché ;
c) les articles pour lesquels la correspondance a été établie sont affichés.

30. Méthode de traitement des signaux numériques selon la revendication 29, **caractérisée en ce que**, sur l'écran affichant des articles, un curseur est disponible, l'utilisateur pouvant déplacer ce curseur en correspondance à l'article souhaité, et **en ce que**, en appuyant sur la touche appropriée, le récepteur peut être programmé pour fonctionner sur la base du programme choisi à l'heure indiquée et sur la chaîne indiquée.

31. Méthode de traitement des signaux numériques selon la revendication 1, **caractérisée en ce que** ledit événement déterminé est la connexion au / déconnexion du secteur d'une partie du récepteur.

32. Méthode de traitement des signaux numériques selon la revendication 1, **caractérisée en ce que** ladite page spéciale, identifiée par un numéro déterminé, est identifiée par un numéro contenant un chiffre qui est au moins supérieur à 9.

33. Méthode de traitement des signaux numériques selon une des revendications précédentes, **caractérisée en ce que** ladite unité centrale de contrôle et de traitement (15) est programmée de façon à faire le nécessaire pour la mise à jour dans la mémoire des données concernant les programmes de télévision de toutes les stations émettrices recevables, en répétant les opérations de la revendication 1 à des intervalles de temps relativement longs (par exemple une fois par jour).

34. Méthode de traitement des signaux numériques la revendication 11 ou 12, **caractérisée en ce que**, quand on appuie sur ladite deuxième touche déterminée (P) ou sur ladite troisième touche déterminée (R), et que le programme sélectionné n'a pas encore commencé, et que le code V.P.S. est présent, le récepteur se programme lui-même pour se régler sur ce programme et l'afficher, ou l'enregistrer respectivement, en utilisant les informations V.P.S. afin de savoir exactement l'heure du début et de la fin du programme.

35. Méthode de traitement des signaux numériques selon la revendication 11 ou 12, **caractérisée en ce que**, quand on appuie sur ladite deuxième touche déterminée (P) ou sur ladite troisième touche déterminée (R), et qu'il est prévu que le programme sélectionné sera interrompu par un programme différent et ensuite repris, il est prévu que l'utilisateur puisse décider s'il souhaite que le programme sélectionné (programme contenant) reste sélectionné jusqu'à la fin ultime, ou jusqu'à l'interruption.

36. Méthode de traitement des signaux numériques selon la revendication 35, **caractérisée en ce que**, au cas où le programme sélectionné serait interrompu par un programme différent et ensuite repris, il est possible de sélectionner que le programme reste sélectionné jusqu'à la fin ultime en appuyant deux fois sur une touche déterminée (M, R, P).

37. Récepteur de signaux de télévision à traitement des signaux numériques insérés pendant les périodes de retour du spot vertical dans le signal de télévision reçu, comprenant :
- au moins un dispositif de syntonisation (11) pour régler au choix une des diverses stations émettrices de télévision recevables,
- un décodeur (14) pour recevoir et décoder les signaux numériques insérés, pendant les périodes de retour du spot vertical, dans le signal de télévision reçu,
- une unité centrale de contrôle et de traitement numérique (15), connectée au décodeur, également pour analyser les signaux numériques reçus et décodés,
- un moyen de commande (16) pour permettre à l'utilisateur d'envoyer des commandes opérationnelles à ladite unité centrale (15),
- une première mémoire numérique non volatile (17) pour stocker les données, dans laquelle il est possible de stocker les coordonnées de syntonisation d'une pluralité de stations émettrices ; les coordonnées de syntonisation de chaque station émettrice est associée à un numéro de station spécifique, associé à une station émettrice, et
- une deuxième mémoire numérique non volatile (18) pour stocker les instructions opérationnelles pour ladite unité centrale (15),
ledit récepteur comprenant également ou étant associé à :
- un dispositif d'affichage de l'image (13), ou
- un dispositif d'enregistrement des programmes de télévision,
**caractérisé en ce que** ladite deuxième mémoire (18) contient des instructions afin que ladite unité centrale lesdits signaux numériques conformément aux étapes suivantes :
a) ledit syntoniseur (11) est commandé pour être réglé sur une première station émettrice recevable,
b) le signal de télévision réglé est examiné et il est déterminé s'il contient des signaux numériques insérés dans les périodes de retour du spot vertical du type télétexte,
c) dans le cas affirmatif, the signal numérique de type télétexte est analysé et il est déterminé si, dans ledit signal, une page spéciale est disponible, identifiée par un code standardisé spécial, laquelle page est une page de sommaire utile pour identifier les pages contenant les informations sur les programmes de télévision,
d) lesdites informations sont exprimées d'une façon standardisée
e) dans le cas affirmatif, lesdites pages sont examinées et les données contenues dans ces pages sont stockées,
f) le syntoniseur (11) est commandé pour être réglé sur une deuxième station émettrice recevable, et les étapes précédentes b, c, e sont répétées, puis le syntoniseur est commandé pour être réglé sur une troisième station émettrice, et ainsi pour toutes les stations émettrices disponibles,
g) les informations stockées de cette manière concernant les programmes de télévision fournis par les stations émettrices balayées conformément aux étapes précédentes sont analysées et classées de cette façon, fournissant un répertoire sous la forme d'une liste des programmes de télévision obtenus par la combinaison des informations extraites des stations émettrices balayées, et
h) le récepteur est préréglé pour afficher sur ledit dispositif d'affichage (13), à chaque fois qu'on appuie sur une première touche ou sur un bouton (M) déterminé compris dans ledit moyen de commande (16), en particulier ladite touche ou ledit bouton servant aussi à rappeler le récepteur à partir de l'état de veille, une liste des programmes de télévision rendus disponibles par lesdites stations émettrices balayées, les classant dans l'ordre à côté des « numéros de réglage des programmes », dont les coordonnées ont été enregistrées dans ladite première mémoire (17), conformément à ce qui est mentionné ci-dessus.
